# EUROPEAN PATENT SPECIFICATION

(11) **EP 0 415 689 B1**
(45) Date of publication and mention of the grant of the patent: **30.11.1994**
(21) Application number: 90309361.5
(22) Date of filing: 28.08.1990
(51) Int. Cl.: B60T 15/04

(54) **Fluid pressure operable braking apparatus**
Druckluftbremsanlage
Système pneumatique de freinage

(30) Priority: 31.08.1989 GB 8919703
(43) Date of publication of application: 06.03.1991
(73) Proprietor: BENDIX HVCG EUROPE LIMITED, Kingswood, Bristol BS15 2NL (GB)
(72) Inventor: Hallett, Roger Charles, Tetbury, Gloucester (GB)
(74) Representative: Turner, Alan Reginald

(56) References cited:
- DE-A- 2 720 632
- DE-A- 3 301 744
- DE-A- 3 844 382

## Description

This invention relates to fluid pressure operable braking apparatus and relates especially to compressed air secondary and parking brake apparatus for towing vehicle and trailer vehicle combinations.

Brake systems for towing and trailer vehicle combinations of vehicles have been proposed wherein in addition to dual foot valve operable service and/or parking brake circuits, the towing vehicle is provided with secondary and/or parking brake circuits. Typically, a parking brake circuit includes a hand operable brake control valve which controls the application of fluid pressure from a reservoir or reservoirs to brake actuators of the tractor vehicle. Such actuators may be spring brake actuators a hold-off pressure to which is graduably released in accordance with the setting of the control valve. For parking the vehicle the hand operable control valve may be placed in a locked position in which the control pressure is completely vented to provide a demonstrated parking condition solely by virtue of the force exerted by the spring brake actuators. If the towing vehicle has a trailer vehicle attached the trailer vehicle may typically be provided with a fluid pressure supply/emergency line and a control line, each such line being connected to a corresponding line of the towing vehicle. For normal service braking a fluid pressure is relayed from the trailer reservoir (charged from the emergency supply line) to service brake actuators. For secondary operation the service actuators of the trailer vehicle are similarly controlled by the trailer control line pressure. For parking the combination the trailer line pressure is vented and the combination is parked by virtue of the towing vehicle spring brake actuators being similarly vented.

Mechanical braking means may be operated on the trailer vehicle by the driver after leaving the drivers cab if it is required to leave the combination for any period of time on a slope or, alternatively, the towing vehicle is to be separated from the trailer.

In an alternative proposal, more particularly relating to apparatus used in continental Europe, the hand operable control valve of the secondary and parking system is designed to have a parking position at which whilst the towing vehicle spring brakes are vented the control line is left at full secondary control pressure. Thus, the combination is parked initially with full secondary braking force being applied by the service brake actuators on the trailer vehicle. In order to enable the driver to check that the tractor parking brakes are capable of holding the combination on an incline, even with subsequent leakage of the secondary braking pressure from the trailer service braking actuators, the hand operable towing vehicle control valve has been provided with a "test" position at which the trailer vehicle control line pressure is modified to a pressure corresponding to zero braking before being restored by the handle being returned to the "park" position. In such a system as referred to above it is very desirable to include anti-compounding means to ensure that excessive forces are not applied to the respective brake mechanism by virtue of the combined effects of service braking on the one hand and secondary or parking braking on the other. In the case of a trailer vehicle with spring brake actuators such as anti-compounding means results in the trailer vehicle spring brakes not being applied whilst the secondary/park brake pressure is present on the respective service chambers in the case of the above mentioned continental system.

A valve for emergency and parking brake control which might be adapted to be used in such a continental system is described in the Specification of DE-OLS-3844382. In that valve arrangement it is necessary to move a brake control handle from a full emergency brake position through a position in which the vehicle parking brakes alone are applied before moving to a parking position.

The continental system can have a shortcoming in that unless the parking control valve is designed to ensure that on each and every occasion before parking the driver executes a test procedure resulting in venting of the control line to show that the combination is capable of remaining stationary on a slope by virtue of the tractor parking brake forces along, there is a risk that subsequent leakage of the brake control pressure on the trailer may result in sufficient reduction of braking force of the combination to allow the combination to move before the pressure reaches a value at which due to the anti-compounding, the spring brakes start to become effective.

According to the present invention there is provided vehicle compressed air braking apparatus for a towing vehicle including parking and secondary brake pressure control valve means adjustable over a range of settings to cause variable control pressure to be applied to brake actuator means of the towing vehicle for secondary braking whilst also causing variable control pressure to be applied to a control line for the brake system of a trailer vehicle, the pressure in said control line being variable over a range extending between a zero value and a relatively high value corresponding to a range of magnitudes of braking force extending from zero to a full braking value for the trailer vehicle and characterised in that said control valve means has a further selectable setting whereat whilst it causes a full parking brake application on the towing vehicle it establishes a predetermined partial pressure value in said control line such as to cause a trailer vehicle parking brake force which is correspondingly less than the said full braking value.

In order that the invention may be more clearly understood and readily carried into effect, the some will be further described by way of example with reference to the accompanying drawings of which:
- Fig. 1: illustrates a tractor vehicle compressed air braking system,
- Fig. 2: illustrates a tractor vehicle compressed air brake system and,
- Fig. 3: illustrates a hand operable control valve for use in the system of Fig. 1.

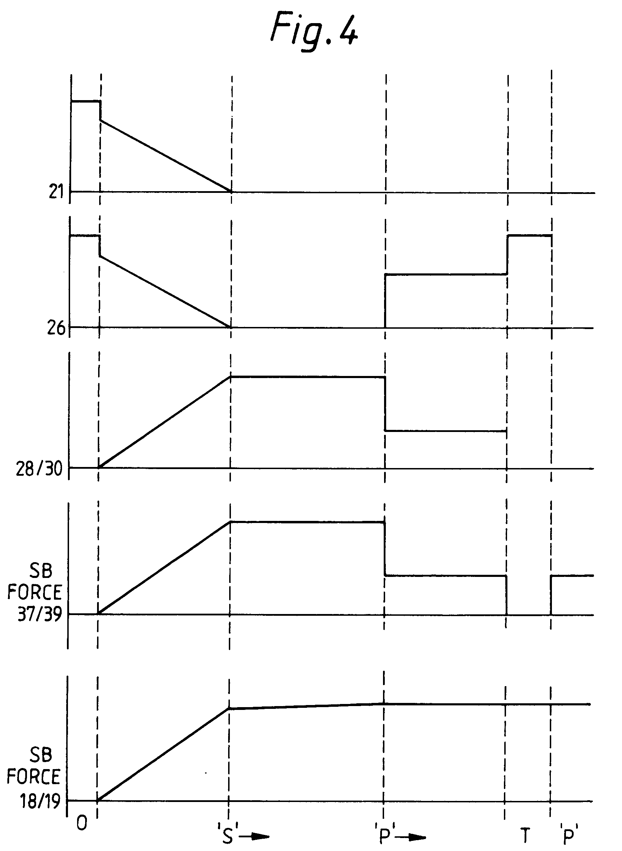

- Fig. 4: is a graphical illustration of the operation of the system.

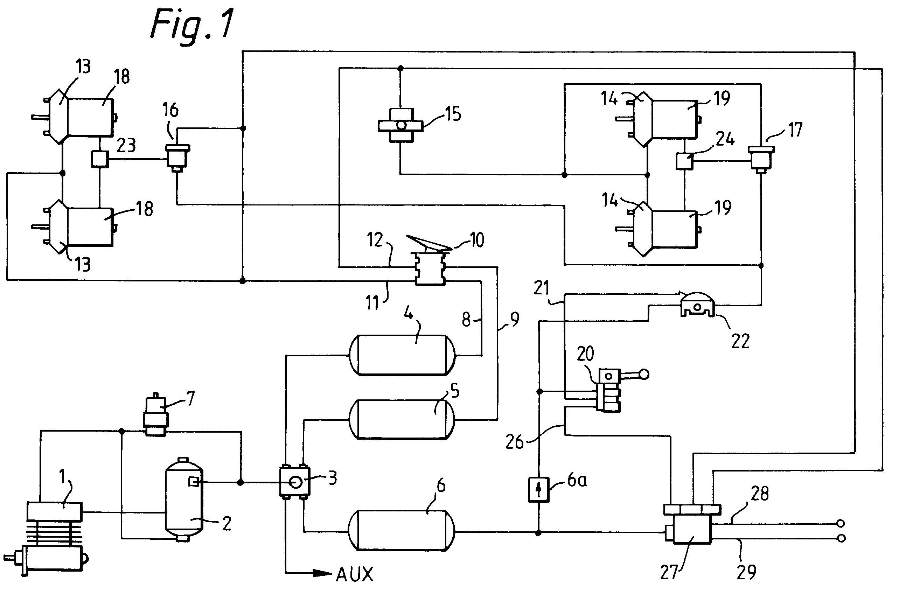

Referring to Fig. 1 the tractor vehicle compressed air braking apparatus shown therein includes a compressor 1, which is driven by the engine of the vehicle supplying compressed air via an air dryer 2 and a multi circuit protection valve 3 to individual reservoirs 4, 5 and 6. A governer and unloader device is denoted by reference 7, for effecting unloading of the compressor and purging of the air dryer when the sensed pressure of the reservoirs 4, 5 and 6 has breached a predetermined value. Reservoirs 4 and 5 constitute service brake reservoirs and provide outputs via connections 8 and 9 to supply circuit inputs of a dual circuit foot valve 10 which is operable in conventional manner as a service brake under the driver's foot. One output line 11 of the dual foot valve provides graduable service pressure to service brake actuator portions 13 of combined spring and service brake actuators to the front axle of the towing vehicle and the line 12 of the dual foot valve provides control pressure to corresponding service actuator portions 14 of combined spring and service actuators of the rear axle of the towing vehicle. However, in this case the pressures are variable with load by a variable load valve 15. Further, for the purposes of preventing compounding of service brake forces and parking brake force of the combined spring and service brake actuators, pressures from lines 11 and 12 are applied to differential protection valve 16 and 17 via which hold-off pressures are applied to the respective spring brake portions denoted by references 18, 19 on the front and rear axles.

Parking and secondary brake application is effected by a band operable control valve denoted by reference 20 which is supplied by fluid pressure via a check valve 6a from reservoir 6. The control valve 20 has a first output line 21 for controlling a relay valve 22, the output pressure of which is applied via the respective anti-compounding valves 16,17 and respective quick release valves 23, 24 to the spring brake actuators 18, 19. The second output line from the control valve 20 denoted by reference 26 is applied as one input to a multi relay valve 27 having two further inputs comprising the pressures on lines 11, 12 from the dual circuit foot valve 10. The relay valve 27 is supplied with input pressure from the reservoir 6 and provides output pressure on control line 28 and a supply line pressure on line 29. These lines being for connection to a trailer vehicle braking system.

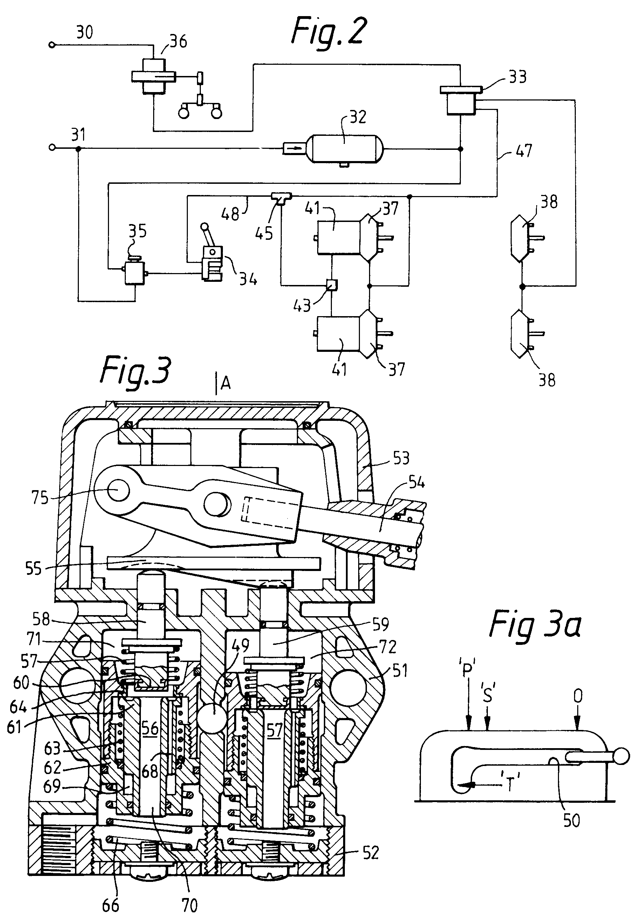

Referring to Fig. 2, the supply lines 28, 29 of the tractor circuit of Fig. 1 are coupled to respective lines 30, 31 whereby the supply pressure on line 31 is applied via a check valve to a trailer vehicle reservoir 32 for providing a supply to a relay valve 33 and a hand operable parking brake valve 34 of the trailer vehicle via a manoeuvring valve 35. The control line is connected via a variable load valve 36 as a control input to relay valve 33. Service brake outputs of the relay valve 33 are applied directly to service/secondary actuating portions 37, 38 of two axles of the trailer vehicle. The actuators 38 are individual service chambers, whereas actuators 37 are provided by service portions of combined service and parking spring brake actuators 41 which are controlled via a quick release valves 43, via a double check valve 45. The double check valve 45 receives one controlling input on line 47 from the relay valve 33 and another controlling input on the line 45 from the hand operable control valve 34.

The operation of the service brake features of Fig.1 will be described only briefly except in so far as it is necessary to enlarge upon it for the understanding of the invention.

The service brake system is entirely conventional, control pressure being applied to compressed air service actuator portions 18, 19 of the respective front and rear axles via completely independent circuits 11 and 12 from the driver's dual foot valve 10. Additionally, the pressures in lines 11 and 12 are each independently effective on multi-relay valve 27 to produce corresponding control line pressure on trailer control line 29. In the absence of one such output pressure of valve 10, the other output pressure remains effective but the outputs are not additive for the purposes of the operation of the multi-relay valve 27.

The control line pressure on line 30, being applied to trailer vehicle relay emergency valve 33 (Fig.2), results in corresponding compressed air pressure being applied to actuator portions 38 and 39 for service braking on the trailer vehicle. In normal running the trailer vehicle parking valve 34 is set to a position wherein supply line pressure from line 31 is applied via manoeuvring valve 35 to the spring brake actuator portions via double check valve 45. The trailer vehicle parking brake actuators are therefore held in the fully pressurised (brakes release) condition.

In the absence of service or secondary pressure on the trailer via line 30, if the parking brake handle of valve 34 is placed in the park position the spring brakes 41,42 are vented and therefore fully applied. Again, if the trailer is so parked and no pressure is available on line 31, the maneouvring valve 35 can be operated to connect the spring brakes to reservoir 32, which if charged will allow the trailer vehicle to be moved.

Considering now the secondary and parking brake operation for the towing vehicle and trailer vehicle combination, the handle of the hand operable control valve 20 is normally in an "off" condition for which line 21 and line 26 are both fully pressurised from reservoir 6. The spring brake actuator portions 18, 19 of the towing vehicle are therefore held in a fully released condition and the control line 28 leading to the trailer vehicle system is vented by virtue of the valve 27 operating in inverse manner under control of the pressure from line 26. Movement of the control handle of valve 20 towards a secondary brake application, gives a quick initial reduction in the pressure on line 21 and then enables the pressures on lines 21 and 26 to be gradually reduced over the spring brake control range.

The hold-off pressure to the towing vehicle spring brake actuators 18, 19 therefore reduces such as to allow these actuators to produce brake force. Similarly, the pressure on control line 28 increases to result in the relaying of pressure to the brake actuator portions 37, 38 of the trailer vehicle to provide braking thereby under control of valve 20 up to a maximum secondary brake pressure value.

If the hand operable control valve is placed into its park position, the pressure on line 21 is now vented thereby fully applying the spring brakes on the tractor vehicle whereas the output pressure on line 26 is restored to a pressure value, typically chosen close to the pressure below which the spring brake actuators begin to apply brake force. Typically the brakes may then produce a brake force one-third of the maximum service braking pressure value.

Before leaving the driving position in the tractor vehicle the driver should implement a test procedure resulting in temporary venting of the control line as provided for in the valve 20. However, the driver may leave the driver's cab without so doing and then manually operate the parking brake valve 34 on the trailer.

Placing the parking brake valve 34 on the trailer in its park position results in the line 48 to double check valve 45 being vented. Although the spring brake actuator portions 41 may not thereby be applied immediately because of the action of the double check valve 45, if the pressure on line 47 reduces into the control range of the spring brake actuators the spring brakes come into operation, their forces then taking over from the pneumatic parking brake forces previously produced by actuator portions 37, 39. The system thus offers parking brake effort on the towing vehicle and trailer which is greater than provided by the towing vehicle brakes and the risk of this effort being reduced due to control line pressure loss (even where a trailer vehicle parking brake is not operated) are low.

A sectional diagrammatical view of a hand operable control valve for use as the valve 20 of the towing vehicle braking system of Fig. 1 is shown in Fig. 3. The valve comprises a main body part 51 with a lower cover plate 52 and an upper cover 53 having a suitably designed gate slot 50 (Fig. 3a) in which a control handle assembly 54 is able to control the position of a control cam member 55. As will be seen the control cam member is rotatable about a vertical axis 'A' as seen in the drawing and also moveable along this axis all such movement being constrained by the shape of the gate slot 50. Within the main body part 51 a compressed air input passage 49 which receives compressed air from reservoir 6 (Fig. 1) communicates with two substantially identical graduable double valve assemblies 56 and 57 respectively controlled by the cam member 55 through respective plungers 58 and 59 which have upwardly projecting stems sealing with and slideable in the main body 51. Referring briefly to the valve assembly 56 this has an exhaust valve closure member 60 carried by the lower end of plunger 58 and engageable with a double valve member 61 slidingly carried in a cylindrical piston 62.

Member 61 is itself urged by a light spring 63 against an annular seal 64 and 61 has a central vent passage 70 which is closeable by member 60 prior to unseating thereby of the member 61 from seat 64. A graduating spring 66 is captive between the lower plate 52 and piston 62 and a light captive spring 67 acts in a sense to urge the plunger 87 upwards and away from the piston 62. The valve member 61 is provided with a small passage 68 which communicates between the upper end thereof and a small enclosed annular region 69 to provide pressure balancing for the double valve member.

In operation of the plunger 58 and valve assembly 56, downward movement of the plunger 58 first causes the vent valve seat 61 to be closed, followed by unseating of valve member 61 from seat 64 providing communication between input passage 49 and an output region 71 above the piston 62. Since the underside of piston 62 is vented the piston moves downwards under the effet of the output pressure against the graduating spring 67 until the forces balance and member 61 engages seat 64 again the double valve laps with both seats closed off. Such operation of a double valve is conventional and the assembly 57 operates in identical manner, under the influence of plunger 59, to produce a graduable output pressure in the further annular output region 72. In each case downward movement of the plunger results in increasing output pressure whereas upward movement of the plunger results in reduction of output pressure and eventual venting of the respective output regions.

Referring to the handle and cam assembly this is so designed that over a normal control range of angular movement about the mentioned vertical axis the plungers are each moved axially by the cam. Assuming movement from a full secondary brake position 'S' towards brakes off position 'O', the plungers move upwards and output pressure in region 72 exhibits an initial quite rapid drop for a small movement of the handle 51 towards a value corresponding to hold-off pressure for the spring brakes of the towing vehicle and then gradually reduces towards zero for graduating the towing vehicle spring brake portions 18 and 19 (Fig. 1) increasingly to apply the secondary brakes on the towing vehicle. Such action is accompanied by graduated decrease also of pressure in output region 71 and line 26 to result in progressive increase of the pressure in the control line 28 and a connected trailer line 30 (Fig. 2), to apply trailer vehicle secondary braking by actuators 37, 38. When the position of the handle assembly reaches the full secondary brake position in gate slot 50 it reaches a detent (not shown) beyond which by further movement in the same direction towards a park ('P') position, the cam surface profile operating plunger 59 drives the cam downward again to provide in the parking position a predetermined partial output pressure on control line 28. In accordance with the invention this partial pressure may be such as to result in approximately one third of the maximum secondary brake capability on the trailer. In order to enable the driver of the towing/trailer combination to test the parking capability of the towing vehicle spring brakes alone, the handle assembly 54 is able to be further moveable axially in a downward direction about pivot 75 exclusively from the park ('P') position whereby the cam member 55 releases the trailer brakes but following return of the handle to the PARK position the partial control line pressure is reinstated.

In comparison with the previously known continental system, wherein when the hand operable secondary park control valve on a towing vehicle produces maximum secondary brake pressure when placed in the park position, the apparatus in accordance with the present invention has a valve which in its park position produces pressure corresponding to a lower pressure on parking, shortcomings of the continental system are appreciably reduced. Indeed the initial parking control pressure can be so chosen that there is little parking brake force reduction before, on reduction of control line pressure, brakes begin to be applied because of anticompounding arrangement on the trailer. The result is that although the combination is capable of being parked on a greater incline than a U.K. system, (which relies virtually entirely upon the towing vehicle parking capability,) the initial parking capability of the system is now maintained near to or within the eventual capability resulting from manual trailer vehicle brake application by the driver after leaving the driving position.

## Claims

1. Vehicle compressed air braking apparatus for a towing vehicle including parking and secondary brake pressure control valve means (20) adjustable over a range of settings to cause variable control pressure to be applied to brake actuator means (18, 19) of the towing vehicle for secondary braking whilst also causing variable control pressure to be applied to a control line (28) for the brake system of a trailer vehicle, the pressure in said control line (28) being variable over a range extending between a zero value and a relatively high value corresponding to a range of magnitudes of braking force extending from zero to a full braking value for the trailer vehicle and characterised in that said control valve means (20) has a further selectable setting whereat whilst it causes a full parking brake application on the towing vehicle it establishes a predetermined partial pressure value in said control line (28) such as to cause a trailer vehicle parking brake force which is correspondingly less than the said full braking value.

2. Vehicle compressed air braking apparatus as claimed in claim 1, characterised in that in a case where a connected trailer vehicle is fitted with spring brake actuator means the predetermined pressure is close to the hold-off pressure of the spring brake actuator means such that in the event of depletion thereof which would result in a reduction of trailer vehicle parking brake force the trailer spring brake actuators are brought into operation in a sense to tend to compensate for said reduction.

3. Vehicle compressed air braking apparatus as claimed in claim 1 or 2, characterised in that said manually operable control valve means has a further manually selectable position whereat control line pressure is releasable whilst maintaining parking brake application on the towing vehicle.

## Patentansprüche

1. Fahrzeug-Druckluftbremsanlage für ein Zugfahrzeug, umfassend eine Park- und Sekundärbremsdrucksteuerventileinrichtung (20), die über einen Bereich von Einstellungen einstellbar ist, um zu bewirken, daß variabler Steuerdruck an Bremsenbetätigungseinrichtungen (18,19) des Zugfahrzeugs für Sekundärbremsung angelegt wird, während auch bewirkt wird, daß variabler Steuerdruck an eine Steuerleitung (28) für die Bremsanlage eines Anhängerfahrzeugs angelegt wird, wobei der Druck in der Steuerleitung (28) über einen Bereich variabel ist, der sich zwischen einem Wert Null und einem relativ hohen Wert erstreckt, der einem Bereich von Bremskraftgrößen entspricht, der sich von dem Wert Null zu einem Vollbremswert für das Anhängefahrzeug erstreckt,
**dadurch gekennzeichnet,** daß die Steuerventileinrichtung (20) eine weitere auswählbare Einstellung hat, bei welcher, während sie ein volles Anlegen der Parkbremse an dem Zugfahrzeug bewirkt, einen vorbestimmten Teildruckwert in der Steuerleitung (28) hervorruft derart, daß eine Parkbremskraft des Anhängerfahrzeugs hervorgerufen wird, die entsprechend kleiner als der genannte Vollbremswert ist.

2. Fahrzeug-Druckluftbremsanlage nach Anspruch 1, dadurch gekennzeichnet, daß in einem Fall, in welchem ein angeschlossenes Anhängerfahrzeug mit Federbremsbetätigungseinrichtungen ausgerüstet ist, der vorbestimmte Druck nahe dem Sperr- oder Haltedruck der Federbremsbetätigungseinrichtungen liegt derart, daß im Fall seiner Erschöpfung, die zu einer Verringerung der Parkbremskraft des Anhängerfahrzeugs führen würde, die Anhängerfederbremsbestätigungseinrichtungen in Wirkung gebracht werden in einem Sinn, daß sie das Bestreben haben, die genannte Verringerung zu kompensieren.

3. Fahrzeug-Druckluftbremsanlage nach Anspruch 1 oder 2, dadurch gekennzeichnet, daß die von Hand betätigbare Steuerventileinrichtung eine weitere von Hand auswählbare Position hat, bei welcher der Steuerleitungsdruck aufgehoben werden kann, während das Anlegen der Parkbremse des Zugfahrzeugs aufrechterhalten wird.

## Revendications

1. Dispositif de freinage à air comprimé pour un véhicule tracteur comprenant une soupape de régulation (20) de la pression des freins de stationnement et de freinage auxiliaire, ajustable dans une gamme de réglage pour produire une pression de commande variable destinée à être appliquée aux actionneurs de frein (18, 19) du véhicule tracteur pour le freinage auxiliaire tout en produisant une pression de commande variable destinée à être appliquée à une conduite de commande (28) pour le système de freinage d'un véhicule remorqué, la pression dans ladite conduite de commande (28) étant variable dans une gamme comprise entre une valeur zéro et une valeur relativement élevée, correspondant à une gamme d'amplitudes de force de freinage allant de zéro à une valeur de freinage complet pour le véhicule remorqué,
et caractérisé en ce que ladite soupape de régulation (20) a un autre réglage sélectionnable au niveau duquel, alors qu'il produit une application de frein de stationnement total sur le véhicule tracteur, il établit une valeur de pression partielle prédéterminée dans ladite conduite de commande (28) de façon à produire une force de freinage de stationnement du véhicule remorqué qui est inférieure à ladite valeur de freinage total.

2. Dispositif de freinage à air comprimé suivant la revendication 1, caractérisé en ce que, dans un cas où un véhicule remorqué relié est équipé d'actionneurs de frein à ressort, la pression prédéterminée est proche de la pression de blocage des actionneurs de frein à ressort, de telle façon que dans le cas d'un épuisement de celle-ci, qui entraînerait une diminution de la force de freinage de stationnement du véhicule, les actionneurs de frein à ressort de la remorque sont actionnés de manière à tendre vers une compensation de ladite diminution.

3. Dispositif de freinage de véhicule à air comprimé suivant les revendications 1 ou 2, caractérisé en ce que ladite soupape à commande manuelle comporte une autre position sélectionnable manuellement, à laquelle la pression de la conduite de commande peut être libérée tout en maintenant le frein de stationnement appliqué sur le véhicule tracteur.
